# EUROPÄISCHE PATENTSCHRIFT

(11) **EP 3 681 758 B1**
(45) Veröffentlichungstag und Bekanntmachung des Hinweises auf die Patenterteilung: **27.12.2023**
(21) Anmeldenummer: 18779250.2
(22) Anmeldetag: 14.09.2018
(51) Int. Cl.: B60N 2/56, B60H 1/00

(54) **BELÜFTUNGSVORRICHTUNG FÜR EIN FAHRZEUG**
VENTILATION DEVICE FOR A VEHICLE
DISPOSITIF DE VENTILATION D'UN VÉHICULE

(30) Priorität: 15.09.2017 DE 102017121423
(43) Veröffentlichungstag der Anmeldung: 22.07.2020
(73) Patentinhaber: Volkswagen Aktiengesellschaft, 38440 Wolfsburg (DE)
(72) Erfinder: ENKE, Lukas, 10999 Berlin (DE); BUDER, Ricardo, 38110 Braunschweig (DE); UHLENBUSCH, Olaf, 96275 Marktzeulen (DE); MICHEL, Timo, 96365 Nordhalben (DE)
(74) Vertreter: Bals & Vogel Patentanwälte PartGmbB
(86) Internationale Anmeldenummer: PCT/EP2018/074932
(87) Internationale Veröffentlichungsnummer: WO 2019/053211

(56) Entgegenhaltungen:
- WO-A1-2016/158472
- CN-U- 202 981 070
- DE-A1-102015 100 309
- FR-A1- 2 843 916
- JP-A- 2006 131 106
- JP-A- 2017 154 617
- US-A1- 2015 266 404

## Beschreibung

Die vorliegende Erfindung betrifft eine Belüftungsvorrichtung gemäß der im Oberbegriff des Anspruchs 1 näher definierten Art.

Es ist bekannt, verschiedene Klimatisierungsfunktionen in einem Fahrzeug zu nutzen. Solche Klimatisierungsfunktionen können z. B. Spot- und Diffusausströmungsfunktionen sein. Dabei ist es für die hinteren Sitzreihen im Fond des Fahrzeuges häufig nicht oder technisch nur sehr aufwendig möglich, diese Funktionen bereitzustellen. Problematisch sind dabei insbesondere Bauraumrestriktionen, durch welche die Integration der Klimatisierungsfunktionen für den hinteren Sitzbereich erschwert wird. Entsprechend stehen die Funktionen oft nur den vorderen Sitzreihen zur Verfügung.

Aus der DE 10 2009 043 112 A1 ist ein Fahrzeugsitz für einen Fahrgastraum eines Kraftwagens bekannt, bei welchem eine Belüftungseinrichtung in eine Kopfstütze und in eine Rückenlehne eines Fahrzeugsitzes integriert ist.

Die DE 10 2015 100 309 A1 offenbart ein Luftzufuhrsystem zur Verwendung in einem Fahrzeug.

Aus der EP 3 028 894 A1, der FR 2 843 916 A1 und der DE 10 2015 100309 A1 sind gattungsgemäße Belüftungsvorrichtungen bekannt.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine verbesserte Belüftungsvorrichtung bereitzustellen, welche in technisch einfacher und kostengünstiger Weise eine Bereitstellung verschiedener Klimatisierungsfunktionen für die hinteren Sitzreihen eines Fahrzeuges ermöglicht. Die voranstehende Aufgabe wird gelöst durch eine Belüftungsvorrichtung mit den Merkmalen des Anspruchs 1. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Belüftungsvorrichtung beschrieben sind.

Die Aufgabe wird insbesondere gelöst durch eine Belüftungsvorrichtung zur Bereitstellung eines Luftstroms in einem Fahrzeug, mit einer Luftführungsanordnung, welche mit wenigstens drei Luftauslässen verbunden ist, um den Luftstrom an die Luftauslässe zu leiten.

Die wenigstens drei Luftauslässe umfassen:
- einen zentralen Luftauslass zur (insbesondere zentralen) Integration in einen Fahrzeugsitz des Fahrzeuges, um eine gerichtete, d. h. richtbare (Spot-) Luftausströmung in einen Belüftungsbereich hinter dem Fahrzeugsitz, bevorzugt einem Fond, bereitzustellen,
- zwei seitliche Luftauslässe, welche zur Integration in den Fahrzeugsitz seitlich zum zentralen Luftauslass angeordnet sind, vorzugsweise in einen Randbereich des Fahrzeugsitzes, um eine diffuse Luftausströmung in den Belüftungsbereich bereitzustellen.

Dies hat den Vorteil, dass zumindest zwei unterschiedliche Klimatisierungsfunktionen für die hinteren Sitzreihen in konstruktiv vereinfachter Weise bereitgestellt werden können, wie die diffuse Luftausströmung als eine erste Funktion und die gerichtete (richtbare) Luftausströmung als eine zweite Funktion. Ein besonderer Vorteil ergibt sich durch die Anordnung der seitlichen Luftauslässe seitlich zum zentralen Luftauslass, wodurch eine besonders platzsparende Integration im Fahrzeugsitz (insbesondere Vordersitz) möglich ist. Insbesondere bezieht sich hierbei die seitliche Anordnung auf eine Anordnung in einem Seitenbereich, welcher z. B. seitlich von einem gedachten geometrischen Schwer- bzw. Mittelpunkt des zentralen Luftauslasses liegt. In einem montierten Zustand der erfindungsgemäßen Belüftungsvorrichtung mit einem Fahrzeugsitz ergibt sich hierdurch eine Anordnung des wenigstens einen seitlichen Luftauslasses in wenigstens einem Außenbereich, insbesondere Randbereich (in Bezug auf die horizontale Fahrzeugrichtung) des Fahrzeugsitzes. Die zwei seitlichen Luftauslässe sind auf gegenüberliegenden Außenbereichen des Fahrzeugsitzes angeordnet, wobei sich der zentrale Luftauslass in einem oberen Mittelbereich zwischen diesen Außenbereichen erstreckt. Auf diese Weise ergibt sich, jedenfalls aus der Perspektive eines Fahrzeuginsassen auf einem Rücksitz hinter dem Fahrzeugsitz mit der erfindungsgemäßen Belüftungsvorrichtung, eine (umgedrehte) U-Form der Anordnung aus zentralen und seitlichen Luftauslässen.

Insbesondere ist es nachfolgend vorgesehen, dass Richtungsangaben stets in Bezug auf die Fahrzeugrichtungen zu verstehen sind. "Oben" bzw. "Unten" bezieht sich somit auf eine vertikale Fahrzeugachse (oder auch Fahrzeughochachse) und "Vorne", "Vorder" bzw. "Hinten", "Rück" auf eine Fahrzeuglängsachse (oder auch Fahrtrichtung) des Fahrzeuges sowie "links" bzw. "rechts" auf eine horizontale Fahrzeugachse (oder auch Fahrzeugquerachse). Das Fahrzeug ist bspw. als ein Kraftfahrzeug und/oder als ein Personenkraftfahrzeug und/oder als ein Elektrofahrzeug und/oder als ein Hybridfahrzeug ausgebildet.

Die Luftführungsanordnung kann mit einer Luftquelle, z. B. einem Lüfter und/oder einer Klimaanlage des Fahrzeuges, verbunden sein, um den Luftstrom (als klimatisierten Luftstrom) zumindest teilweise von der Luftquelle bis zum jeweiligen Luftauslass zu leiten, sodass der Luftstrom dort in diffuser bzw. gerichteter Weise austritt. Um die Luftführung zu bewirken, kann die Luftführungsanordnung wenigstens einen Luftkanal aufweisen, z. B. ein Teleskoprohr und/oder ein Schlauchelement. Somit kann eine verbesserte Klimatisierung erzielt werden.

Es kann bei der erfindungsgemäßen Belüftungsvorrichtung von Vorteil sein, wenn der Belüftungsbereich, insbesondere ein rückseitiger Bereich hinter dem Fahrzeugsitz, in welchem die gerichtete Luftausströmung (Spotströmung) bzw. die diffuse Luftausströmung (Diffusströmung) bereitgestellt wird, dem Fondbereich des Fahrzeuges hinter den Vordersitzen entspricht. Somit kann die Luftausströmung für wenigstens einen Fahrgast (Fahrzeuginsassen) im Fond bereitgestellt werden, z. B. gerichtet auf wenigstens einen Rücksitz des Fahrzeuges. Des Weiteren ist es im Rahmen der Erfindung vorgesehen, dass eine Befestigungsanordnung zur Befestigung und/oder Anordnung und/oder Ausrichtung der Luftauslässe an einer Rückwand einer Rückenlehne des Fahrzeugsitzes, insbesondere eines Vordersitzes des Fahrzeuges, vorgesehen ist, um die Luftauslässe auf wenigstens einen Rücksitz des Fahrzeuges im Belüftungsbereich, vorzugsweise im Fond des Fahrzeuges, auszurichten und somit die jeweilige Luftausströmung für wenigstens einen Fahrzeuginsassen auf dem Rücksitz bereitzustellen. Hierzu kann die Befestigungsanordnung z. B. Fixierelemente (wie Schrauben oder dergleichen) und/oder wenigstens eine Führungsstange und/oder eine Blende und/oder dergleichen aufweisen, um die Belüftungsvorrichtung an den Fahrzeugsitz zu befestigen. Dies ermöglicht eine zuverlässige Integration in den Fahrzeugsitz, und insbesondere eine konstruktiv einfache Klimatisierung für den Belüftungsbereich im Fond des Fahrzeuges.

Erfindungsgemäß sind die zwei seitlichen Luftauslässe auf unterschiedlichen Seiten gegenüberliegend zum zentralen Luftauslass angeordnet, und auf diesen gegenüberliegenden Seiten mit der Luftführungsanordnung verbunden, wobei der zentrale Luftauslass zwischen diesen Seiten mit der Luftführungsanordnung verbunden ist, um die Luftauslässe gemäß einer U-Form im Fahrzeugsitz anzuordnen. Von weiterem Vorteil kann die Anordnung der seitlichen Luftauslässe symmetrisch zum zentralen Luftauslass sein. Hierdurch kann eine besonders angenehme Anströmung der Fondpassagiere (symmetrisch zur Körpermitte) ermöglicht werden. Auch kann somit eine räumliche Anpassung für eine Anordnung eines Klapptisches am Fahrzeugsitz bereitgestellt werden. Bspw. ist der Klapptisch an der Rückenlehne (Backpanel) des Fahrzeugsitzes befestigt.

Des Weiteren können die seitlichen Luftauslässe und/oder der zentrale Luftauslass jeweils ggf. mit einem zentralen Luftkanal, insbesondere einer Verteilung für den Luftstrom, verbunden sein, sodass von dem zentralen Luftkanal die Luft zu den jeweiligen Luftauslässen geleitet werden kann. In diesem zentralen Luftkanal kann außerdem wenigstens eine Luftklappe integriert sein, um ein situatives Verschließen eines Luftauslasses zu ermöglichen. Die Verstellung dieser Luftklappe kann dabei bspw. manuell und/oder automatisiert und/oder elektrisch erfolgen. Dabei kann für jeden Luftauslass eine jeweils zugeordnete Luftklappe oder alternativ nur eine einzige Luftklappe für sämtliche Luftauslässe vorgesehen sein.

Auch kann es möglich sein, dass der zentrale Luftauslass als ein Spot-Ausströmer, insbesondere als ein Breitbandausströmer, ausgebildet ist. Dieser kann eine reduzierte Einbautiefe und eine Umlenkung aufweisen, um den Luftstrom zum Austreten aus der Ebene des Backpanels umzulenken. Insbesondere kann der zentrale Luftauslass einen Wirkbereich bis zur Seitenscheibe und/oder bis zum Fahrzeughimmel und/oder bis zum Bauch-Bereich der Fahrzeuginsassen im Fond abdecken.

Ferner kann es im Rahmen der Erfindung vorgesehen sein, dass eine Steuerungsanordnung vorgesehen ist, um einen Strömungsmechanismus des zentralen Luftauslasses anzusteuern, sodass vorzugsweise die Luftausströmung des zentralen Luftauslasses zwischen der gerichteten Luftausströmung und einer weiteren diffusen Luftausströmung umschaltbar ist. In anderen Worten kann der zentrale Luftauslass wahlweise eine Luftausströmung in gerichteter Weise (als Spotströmung) und in diffuser Weise bereitstellen, sodass durch den zentralen Luftauslass wie bei dem seitlichen Luftauslass die Strömung auch als diffuse Strömung ausgegeben werden kann. Damit kann ein Umschalten zwischen Klimatisierungsfunktionen durch die Steuerungsanordnung ermöglicht werden. Weiterhin können ggf. schaltbare Belüftungsstile (Spot-Diffus) bereitgestellt werden. Von Vorteil ist es ferner, wenn die Luftauslässe in Bezug auf die Ausströmungsmenge und/oder -richtung und/oder -art verstellbar ausgeführt sind, vorzugsweise elektrisch verstellbar, bevorzugt durch eine Steuerungsanordnung (bspw. als elektrische Richtungsverstellung).

Von Vorteil umfasst die Steuerungsanordnung eine Steuerungseinheit, wie eine Elektronik, insbesondere einen Mikrocontroller oder dergleichen, um eine elektrische Verstellung (bspw. Richtungsverstellung) bei wenigstens einem der Luftauslässe zu ermöglichen. Insbesondere kann durch die Steuerungsanordnung, bspw. durch wenigstens einen Stellmotor, eine Lamelle und/oder ein Verschluss eines jeweiligen Luftauslasses bewegt werden, um die Richtung der Luftströmung einfach und komfortabel zu verstellen. Die Bedienung der Steuerungsanordnung und/oder Richtungsverstellung kann bspw. über eine Eingabevorrichtung, wie ein Bedienteil einer Mittelkonsole, erfolgen. Auch kann die Ansteuerung der Steuerungsanordnung ggf. automatisiert erfolgen, um z. B. Klimatisierungsprofile, wie einen Sommer- und Winterbetrieb, bereitzustellen.

Erfindungsgemäß ist die Luftführungsanordnung längsbeweglich in einer Befestigungsanordnung angeordnet und/oder geführt, sodass die Luftführungsanordnung (insbesondere in Bezug auf eine Längsrichtung des Fahrzeuges) längsverstellbar ausgeführt ist. Damit wird eine Anpassung an eine variierende Sitzposition möglich. Insbesondere ist hierzu die Luftführungsanordnung zumindest längsbeweglich, also zumindest in Längsrichtung und ggf. in weiteren Richtungen beweglich, durch die Befestigungsanordnung geführt und/oder gelagert. Alternativ oder zusätzlich kann die Luftführungsanordnung dadurch längsverstellbar ausgebildet sein, dass die Luftführungsanordnung wenigstens ein (hinsichtlich der Länge) flexibles Element aufweist, insbesondere eine Teleskopstange und/oder ein Schlauchelement und/oder dergleichen.

Vorteilhaft ist es zudem, wenn die Luftführungsanordnung wenigstens einen flexiblen Luftkanal und/oder wenigstens ein Teleskoprohr und/oder wenigstens ein (flexibles und/oder elastisches) Schlauchelement zur Integration an oder im Fahrzeugsitz umfasst, um eine Anpassung an eine Verstellung des Fahrzeugsitzes im Fahrzeug durchzuführen. Hierbei bezieht sich die Verstellung vorteilhafterweise auf eine Verstellung der Sitzposition des Fahrzeugsitzes (z. B. in Fahrzeuglängsrichtung bzw. Fahrtrichtung) und/oder auf einen Verstellwinkel des Fahrzeugsitzes (also einen Verstellwinkel der Rückenlehne) und/oder auf eine Höhenverstellung des Fahrzeugsitzes. Somit kann ein entsprechendes Verstellfeld des Fahrzeugsitzes zuverlässig ausgeglichen werden. Bspw. umfasst das Teleskoprohr verschiedene Rohrsegmente, welche über Dichtlippen abgedichtet sind. Auch kann ein Schlauchelement, insbesondere ein Balg, aus einem flexiblen Material, wie Kunststoff, vorgesehen sein. Darüber hinaus können auch Führungselemente, wie eine Führungsstange, zur Steigerung der Stabilität beim Verfahren des Fahrzeugsitzes für die erfindungsgemäße Belüftungsvorrichtung genutzt werden. Eine Befestigungsanordnung kann vorgesehen sein, um eine Fixierung von Teilen der Belüftungsvorrichtung, insbesondere der Luftführungsanordnung, an die Sitzstruktur zu ermöglichen. Durch das Schlauchelement kann ferner eine Umlenkung der Luftführungsanordnung erfolgen, um einen Aufgang in die Rücklehne des Fahrzeugsitzes und die Anpassung an den Verstellwinkel zu berücksichtigen. Das Schlauchelement kann dabei auch als Gelenkrohr oder Vielgelenk oder dergleichen ausgebildet sein und/oder mit einem luftdichten Schlauch oder Textil umhüllt sein.

Erfindungsgemäß ist wenigstens eine Lamelle im Auslassbereich des zentralen Luftauslasses und/oder der seitlichen Luftauslässe beweglich gelagert, um den Luftstrom aus dem Auslassbereich einzustellen. Hierbei kann die Verwendung von einer oder mehreren Lamellen (z. B. horizontale und/oder vertikale Lamellen) eine Verstellung des Luftstroms in horizontaler bzw. vertikaler Fahrzeugrichtung bewirken. Z. B. kann hierbei die wenigstens eine Lamelle in einer Blende, z. B. einer Zierblende zur Verdeckung der eigentlichen Ausströmfunktion, integriert sein. Es kann dabei vorteilhaft sein, wenn die wenigstens eine Lamelle zur Verstellung in vertikaler Fahrzeugrichtung und/oder wenn die wenigstens eine Lamelle zur Verstellung in horizontaler Fahrzeugrichtung sich manuell oder elektrisch verstellen lässt, z. B. über einen zentralen Reiter und/oder über entsprechende Stellmotoren.

Es ist weiter optional möglich, dass eine Steuerungsanordnung vorgesehen ist, um wenigstens einen Verschluss, vorzugsweise wenigstens eine Lamelle, für wenigstens einen der Luftauslässe zu verstellen. Die Steuerungsanordnung kann dazu wenigstens einen elektrischen Motor, insbesondere Stellmotor, umfassen, welcher zur Übertragung einer Bewegung mit dem Verschluss in mechanischer Verbindung steht. Damit ist eine einfache und zuverlässige Luftregulation möglich.

Insbesondere dienen die seitlichen Luftauslässe als Diffus-Ausströmer im seitlichen Bereich des Backpanels dazu, einen Luftstrom mit reduzierter Strömungsgeschwindigkeit der Luft bei großem Querschnitt des Luftauslasses bereitzustellen. Vorteilhafterweise ist dabei der Querschnitt für den Luftaustritt beim jeweiligen seitlichen Luftauslass größer als bei dem zentralen Luftauslass, z. B. mindestens zweifach so groß. Insbesondere kann ein Gitter, wie ein Kunststoff- oder Metallgitter, an dem seitlichen Luftauslass angeordnet, insbesondere befestigt, sein. Hierbei kann das Gitter eine Vorzugsrichtung zum Richten des Luftstroms aufweisen. Eine diffuse Strömung ermöglicht hierbei, dass keine direkte Anströmung der Beine und/oder des Oberkörpers der hinteren Fahrzeuginsassen erfolgt (diffuse Luftverteilung bei reduziertem Zugempfinden). Ferner kann auch eine Kombination der Strömungsfunktion der seitlichen Luftauslässe mit einem gedrosselten Luftstrom aus einem zentralen Luftauslass möglich sein, um eine U-förmige diffuse Ausströmfläche zu erhalten.

Außerdem kann es im Rahmen der Erfindung von Vorteil sein, dass wenigstens zwei Fahrzeugsitze in einem Fahrzeug vorgesehen sind, und jeweils ein zentraler Luftauslass und jeweils zwei seitliche Luftauslässe an einer jeweiligen Rückwand einer jeweiligen Rückenlehne der jeweiligen Fahrzeugsitze, insbesondere Vordersitze des Fahrzeuges, befestigt sind. Damit ist eine besonders effiziente Fahrzeugklimatisierung möglich.

Erfindungsgemäß ist der zentrale Luftauslass (z. B. in Bezug auf eine Fahrzeugquerachse und/oder eine Ebene des Backpanels) zwischen den seitlichen Luftauslässen angeordnet, sodass in der Ebene des Backpanels eine (umgedrehte) U-Form ausgebildet wird. Bevorzugt ist dabei der zentrale Luftauslass mittig und/oder in einem oberen Bereich des Backpanels (d. h. der Rückenlehne des Fahrzeugsitzes) angeordnet.

Es kann bei dem Belüftungssystem gemäß einem weiteren Vorteil möglich sein, dass die Luftführungsanordnung zumindest teilweise, bspw. wenigstens ein Luftkanal der Luftführungsanordnung, in eine Sitzstruktur und/oder in das Backpanel (der Rückwand) des Fahrzeugsitzes, vorzugsweise Vordersitzes, integriert ist. Bspw. kann hierzu der Luftkanal abgehend von einer Mittelkonsole des Fahrzeuges im Fahrzeugsitz integriert sein. Besonders bevorzugt ist die Luftführungsanordnung dazu ausgeführt, das gesamte Verstellfeld des Fahrzeugsitzes, z. B. als verstellbarer Vordersitz, zu kompensieren. Dies kann durch eine Ausbildung der Luftführungsanordnung mit einer anpassbaren und/oder flexiblen Struktur, z. B. mit einem Teleskoprohr und/oder Schlauchelement, erzielt werden.

Es ist weiter denkbar, dass die Luftauslässe jeweils als Ausströmer mit einer Ausströmfläche (d. h. einem Auslassbereich) ausgebildet sind, welche in die Rückseite des Fahrzeugsitzes integriert sind. Bevorzugt sind dabei die Luftauslässe (in Bezug auf die Auslassbereiche) derart ausgerichtet, dass ein Luftstrom aus den jeweiligen Luftauslässen in den hinteren Bereich (Fondbereich) geleitet wird.

Darüber hinaus kann es von Vorteil sein, wenn wenigstens ein Lichtelement, insbesondere wenigstens eine Leuchtdiode, bei dem Belüftungssystem vorgesehen ist und z. B. in einer Blende angeordnet oder an dieser befestigt ist. Hierdurch kann bspw. in Abhängigkeit von einer Klimatisierungsfunktion, z. B. einer Heizfunktion oder einer Kühlfunktion, eine unterschiedliche Beleuchtung, bspw. mit unterschiedlichen Farben, erfolgen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen jeweils schematisch:
- Fig. 1: eine perspektivische Darstellung eines Belüftungssystems,
- Fig. 2: eine Ansicht aus der Perspektive eines Fahrzeuginsassen im rückseitigen Fondbereich des Fahrzeuges,
- Fig. 3 bis 9: perspektivische Darstellungen von Teilen einer erfindungsgemäßen Belüftungsvorrichtung eines Belüftungssystems
- Fig. 10: eine perspektivische Darstellung einer Sitzschale eines Fahrzeugsitzes,
- Fig. 11 bis 15: Darstellungen verschiedener Klimatisierungsfunktionen.

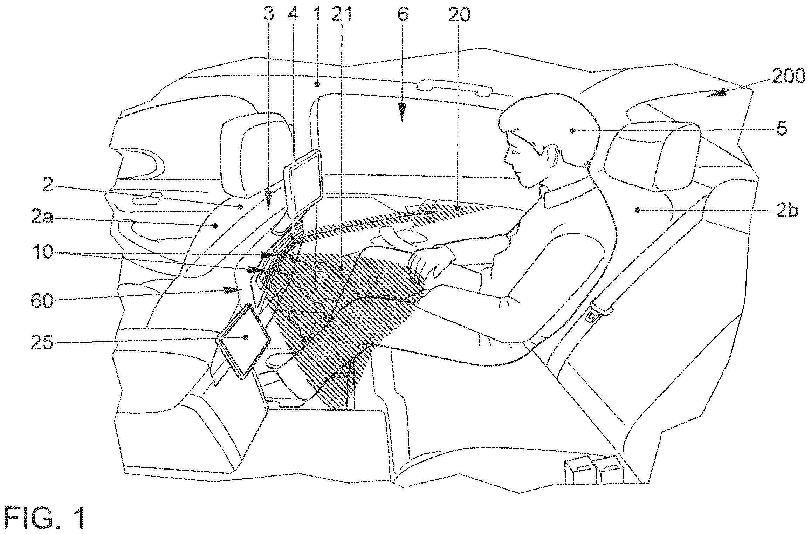

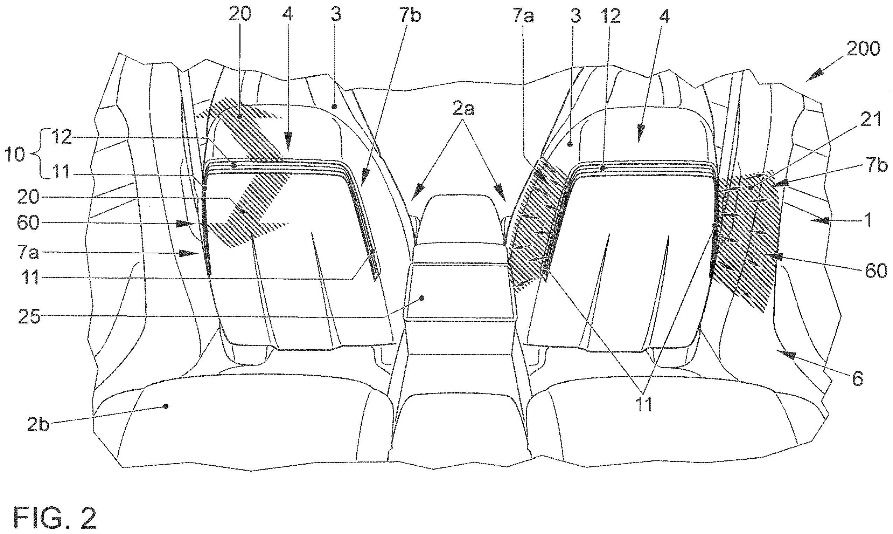

In Figur 1 sind schematisch Teile eines Belüftungssystems 200 gezeigt. Es sind Fahrzeugsitze 2 dargestellt, wobei deutlich ein vorderer Bereich eines Fahrzeuges 1 mit den Vordersitzen 2a von einem rückseitigen Bereich 6 als Belüftungsbereich 6, insbesondere einen Fond, mit den Rücksitzen 2b unterschieden werden kann. Weiter ist dargestellt, dass ein Vordersitz 2a eine Rückenlehne 3 aufweist, welche rückseitig eine Rückwand 4 aufweisen kann. Ein Vorteil bei dem Belüftungssystem 200 ist nun, dass verschiedene Klimatisierungsfunktionen für einen Bereich hinter den Vordersitzen 2a (d. h. ein Bereich mit den Rücksitzen 2b bzw. mit einem rückwärtigen Fahrzeuginsassen 5) bereitgestellt werden können, wie eine Diffusströmung 21 (diffuse Luftströmung) und eine Spotströmung 20 (gerichtete Luftströmung). Solche Klimatisierungsfunktionen sind in Figur 1 beispielhaft anhand eines Strömungspfeils 20 bzw. einer Kennzeichnung 21 gezeigt. Zumindest an der Rückwand 4 kann zur Bereitstellung der Klimatisierungsfunktionen eine erfindungsgemäße Belüftungsvorrichtung 60 angeordnet sein, welche wenigstens drei zwei verschiedene Luftauslässe 10 umfasst. Die Luftauslässe 10 umfassen einen zentralen Luftauslass 12 und zwei seitliche Luftauslässe 11, wie in Figur 2 näher dargestellt ist.

In Figur 2 ist dargestellt, dass auch beide Vordersitze 2a an ihrer Rückenlehne 3 bzw. an der entsprechenden jeweiligen Rückwand 4 jeweils eine erfindungsgemäße Belüftungsvorrichtung 60 aufweisen können. Jede der Belüftungsvorrichtungen 60 weist weiter Luftauslässe 10 auf, d. h. zumindest einen zentralen Luftauslass 12 und zumindest zwei seitliche Luftauslässe 11. Vorteilhaft ist es zudem, wenn diese Luftauslässe 10 fest an der Rückwand 4 angeordnet sind, d. h. in den entsprechenden Vordersitz 2a integriert sind. Die Integration in den Vordersitz 2a ist dabei nur beispielhaft. Es kann daher ggf. auch eine (weitere) Belüftungsvorrichtung 60 in einen Rücksitz 2b integriert sein, wenn bspw. ein Bereich hinter dem Rücksitz 2b belüftet werden soll (bspw. bei weiteren Sitzreihen). Weiter kann es vorgesehen sein, dass die Klimatisierungsfunktionen automatisiert gesteuert werden. So kann bspw. auch eine Umschaltung zwischen einer Spot-Belüftung und einer diffusen Belüftung durch den zentralen Luftauslass 12 möglich sein. Hierzu kann eine Bedienung mittels einer Eingabevorrichtung 25 erfolgen, welche z. B. mittig im Fahrzeug zwischen den Vordersitzen 2a angeordnet ist.

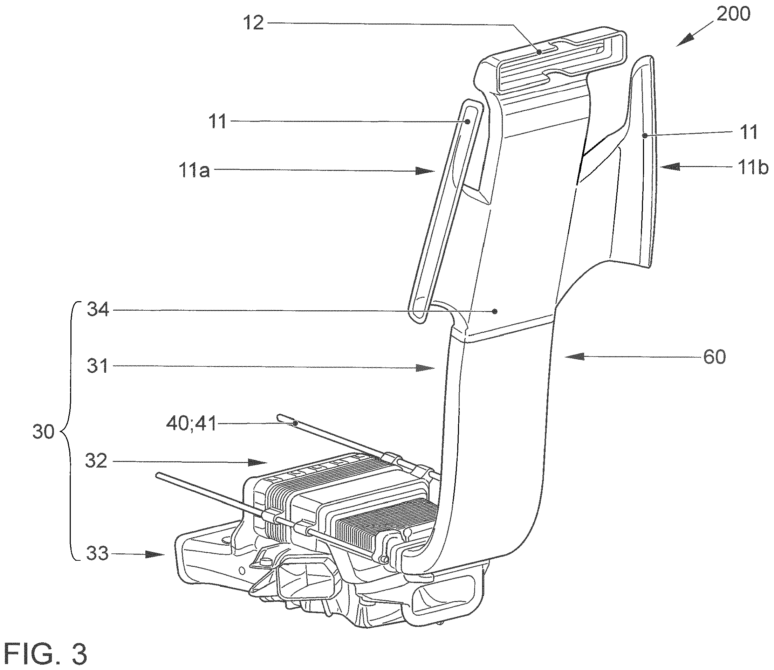

Des Weiteren ist in Figur 2 erkennbar, dass die Anordnung der Luftauslässe 10 für jeden der Fahrzeugsitze 2 in Form eines "U" erfolgen kann, sodass die jeweiligen seitlichen Luftauslässe 11 in unterschiedlichen Seitenbereichen eines jeweiligen Vordersitzes 2a angeordnet sind, und der jeweilige zentrale Luftauslass 12 dazwischen angeordnet ist. Erfindungsgemäß ist ein jeweiliger erster seitlicher Luftauslass 11a in einer ersten Seite 7a eines jeweiligen Fahrzeugsitzes 2 und ein jeweiliger zweiter seitlicher Luftauslass 11b in einer zweiten Seite 7b eines jeweiligen Fahrzeugsitzes 2 angeordnet (vgl. auch Figur 3).

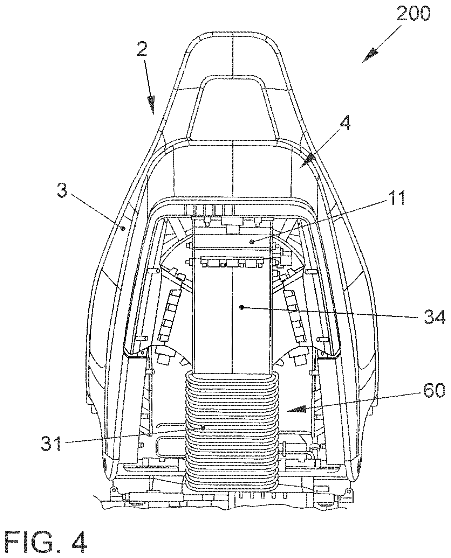

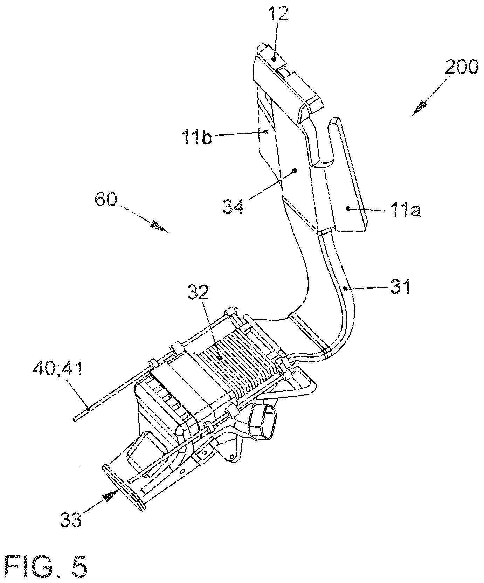

In Figur 3 ist schematisch eine erfindungsgemäße Belüftungsvorrichtung 60 dargestellt. Es ist erkennbar, dass die Teile dieser Belüftungsvorrichtung 60 derart angeordnet sind, dass die Belüftungsvorrichtung 60 in einen Fahrzeugsitz 2 integriert ist, um eine Luftströmung unterhalb des Fahrzeugsitzes 2 vom vorderen in den hinteren Fahrzeugbereich zu leiten. Hierzu weist die Belüftungsvorrichtung 60 eine Luftführungsanordnung 30 auf, welche bspw. wenigstens eine Luftzufuhr 33 und/oder wenigstens ein Teleskoprohr 32 und/oder wenigstens ein Schlauchelement 31 und/oder wenigstens einen Luftkanal 34 aufweist. Diese ermöglichen ggf. auch eine Verstellung (z. B. wenigstens in Längsrichtung) der Luftführungsanordnung 30, um auch bei einer Verstellung des Fahrzeugsitzes 2 den Luftstrom zuverlässig von einer nicht dargestellten Luftquelle (im vorderen Fahrzeugbereich) zu den Luftauslässen 10 zu führen. Hierzu kann auch die Befestigungsanordnung 40 mit wenigstens einer Führungsstange 41 vorgesehen sein, um eine Fixierung der Luftführungsanordnung 30 zu bewirken. In Figur 4 ist beispielhaft die Integration der Belüftungsvorrichtung 60 in einen Fahrzeugsitz 2 gezeigt. In Figur 5 ist die Belüftungsvorrichtung 60 mit der Luftführungsanordnung 30 noch in einer weiteren Perspektive dargestellt.

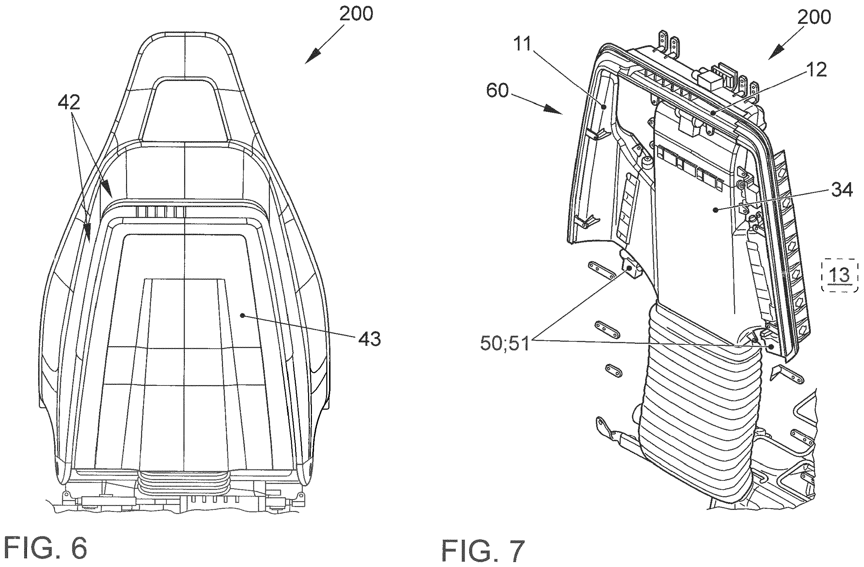

In Figur 6 ist gezeigt, dass eine Blende 42 mit der Belüftungsvorrichtung 60 verbunden sein kann. Insbesondere kann diese Blende 42 einen U-förmigen Luftaustritt für die Luftauslässe 10 aufweisen. Dies ermöglicht auch eine platzsparende Integration eines Klapptisches 43 in den Fahrzeugsitz 2. Optional kann die Blende 42 auch Teil einer Befestigungsanordnung 40 sein, um die Belüftungsvorrichtung 60 an den Fahrzeugsitz 2 zu befestigen.

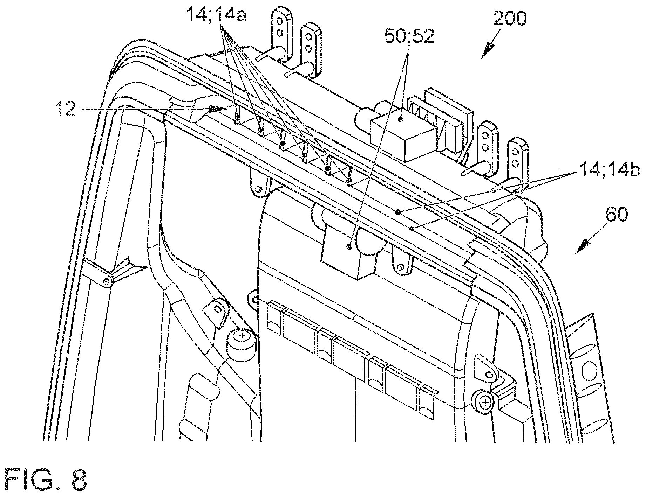

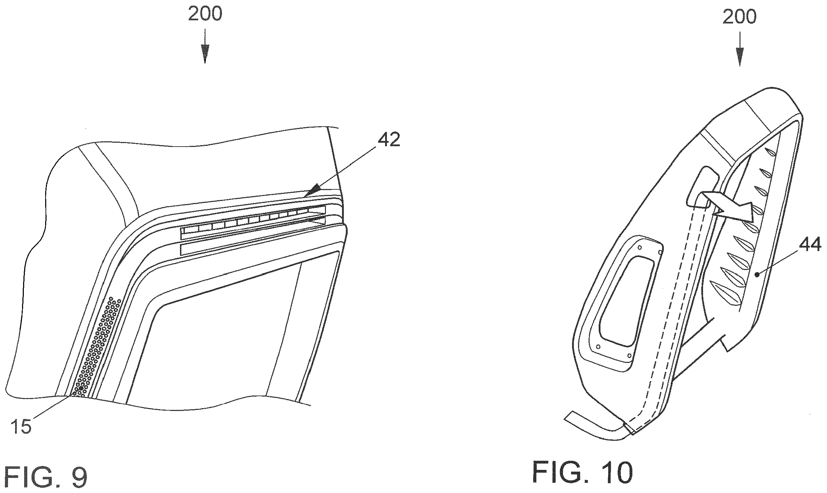

In Figur 7 und 8 ist schematisch eine Steuerungsanordnung 50 für eine erfindungsgemäße Belüftungsvorrichtung 60 dargestellt. Es kann bspw. wenigstens ein erster Stellmotor 51 zum Öffnen und/oder Verschließen von Luftaustrittsbereichen des wenigstens einen seitlichen Luftauslasses 11 vorgesehen sein. Hierzu kann der wenigstens eine erste Stellmotor 51 mit einem Strömungsmechanismus 13 in mechanischer Wirkverbindung stehen, z. B. mit einem Verschluss 13 des wenigstens einen seitlichen Luftauslasses 11. Auch kann wenigstens ein zweiter Stellmotor 52 zur Bewegung von wenigstens einer Lamelle 14 des zentralen Luftauslasses 12 genutzt werden, um eine Strömungsrichtung zu justieren. Zur weiteren Verbesserung der Luftausströmung kann ferner ein Strömungsgitter 15 vor wenigstens einem der Luftauslässe 10 angeordnet sein (siehe Figur 9). Es kann wenigstens eine erste Lamelle 14a zur horizontalen und wenigstens eine zweite Lamelle 14b zur vertikalen Verstellung der Luftrichtung vorgesehen sein.

Figur 10 zeigt schematisch eine Sitzschale 44, welche angepasst ist, um eine Belüftungsvorrichtung 60 aufzunehmen. Hierzu kann die Sitzschale 44 z. B. wenigstens eine Öffnung zur Aufnahme eines Luftkanals 34 aufweisen.

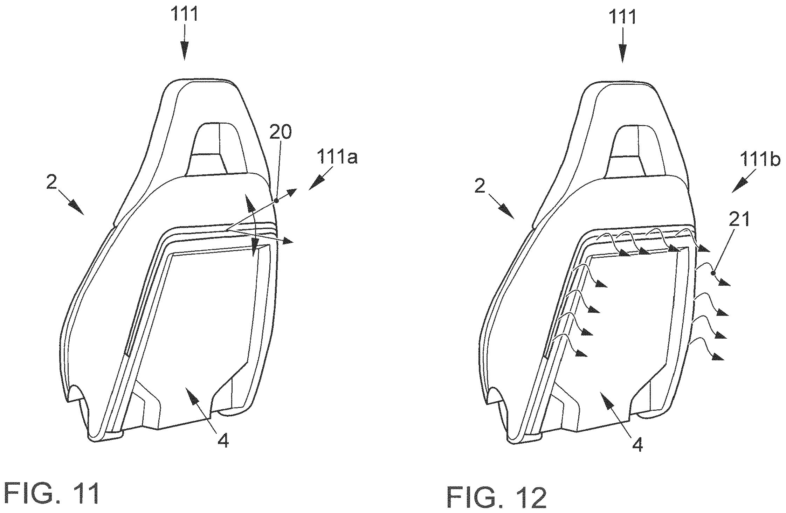

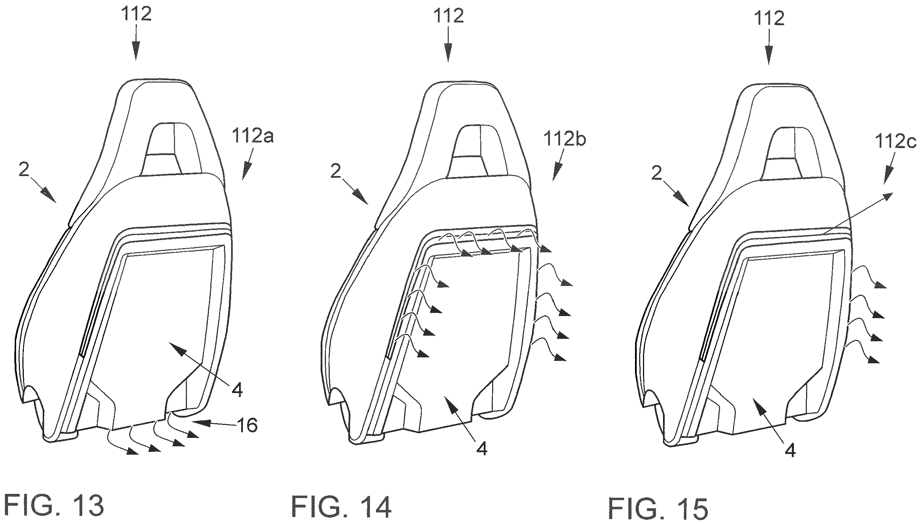

In den Figuren 11 bis 15 sind schematisch verschiedene Klimatisierungsfunktionen gezeigt. Die verschiedenen Klimatisierungsfunktionen werden nachfolgend als Kühl- bzw. Heizfälle bezeichnet. Gemäß einem Kühlfall 111 kann in einem ersten Kühlfall 111a ein richtbarer Spot erzeugt werden. In einem zweiten Kühlfall 111b kann eine diffuse Belüftung erzeugt werden. Hierbei erfolgt jeweils keine Heizung der Luft, anders als in den Heizfällen 112, bei denen der Luftstrom auf eine automatisch und/oder durch den Fahrzeuginsassen 5 manuell bestimmbare Temperatur erhitzt werden kann. Gemäß einem ersten Heizfall 112a kann eine Warmluft über Fußausströmer 16 oder einem Auslass im unteren Backpanel 4 erzeugt werden. Gemäß einem zweiten Heizfall 112b kann zur Erzeugung einer Heizdecke die Belüftungsvorrichtung 60 betrieben werden. In einem dritten Heizfall 112c kann eine Defrost-Funktion bereitgestellt werden.

Die voranstehende Erläuterung der Ausführungsformen beschreibt die vorliegende Erfindung ausschließlich im Rahmen von Beispielen.

### Bezugszeichenliste

- 1: Fahrzeug
- 2: Fahrzeugsitz

- 2a: Vordersitz
- 2b: Rücksitz
- 3: Rückenlehne
- 4: Rückwand, Backpanel, Rückwand Rückenlehne
- 5: Fahrzeuginsasse
- 6: Belüftungsbereich, rückseitiger Bereich, Fond

- 7a: erste Seite
- 7b: zweite Seite

- 10: Luftauslass
- 11: seitlicher Luftauslass, für Diffus-Ausströmer

- 11a: erster seitlicher Luftauslass
- 11b: zweiter seitlicher Luftauslass
- 12: zentraler Luftauslass, für Spot-Ausströmer
- 13: Strömungsmechanismus, Verschluss, zum Verschließen der Diffus-Bereiche
- 14a: erste Lamelle(n), für das horizontale Justieren der Strömungsrichtung
- 14b: zweite Lamelle(n), für das vertikale Justieren der Strömungsrichtung
- 15: Strömungsgitter
- 16: Fußausströmer

- 20: Spotströmung, gerichtete Luftausströmung
- 21: Diffusströmung, diffuse Luftausströmung
- 25: Eingabevorrichtung

- 30: Luftführungsanordnung, Luftkanalanordnung
- 31: Schlauchelement, Balg
- 32: Teleskoprohr
- 33: Luftzufuhr, (aus Front- oder Mittelkonsolenklimagerät)
- 34: Luftkanal, Verteilung
- 40: Befestigungsanordnung
- 41: Führungsstange
- 42: Blende
- 43: Klapptisch
- 44: Sitzschale

- 50: Steuerungsanordnung
- 51: erster Stellmotor, für 13, für Verschließen/Öffnen der Diffus-Bereiche
- 52: zweiter Stellmotor, für 14, für Bewegung der Lamellen der Spot-Ausströmer

- 60: Belüftungsvorrichtung

- 111: Kühlfall

- 111a: erster Kühlfall zur Erzeugung eines richtbaren Spots
- 111b: zweiter Kühlfall zur Erzeugung einer diffusen Belüftung
- 112: Heizfall

- 112a: erster Heizfall zur Erzeugung von Warmluft über Fußausströmer oder Auslass im unteren Backpanel
- 112b: zweiter Heizfall zur Erzeugung einer Heizdecke
- 112c: dritter Heizfall zur Bereitstellung einer Defrost-Funktion

- 200: Belüftungssystem

## Patentansprüche

1. Belüftungsvorrichtung (60) zur Bereitstellung eines Luftstroms in einem Fahrzeug (1), wobei die Belüftungsvorrichtung eine Luftführungsanordnung (30) umfasst, die mit wenigstens drei Luftauslässen (10, 12) verbunden ist, um den Luftstrom an die Luftauslässe (10, 12) zu leiten, und
wobei die Belüftungsvorrichtung einen Fahrzeugsitz (2) und eine an dem Fahrzeugsitz (2) befestigte Befestigungsanordnung (40) umfasst,
wobei die wenigstens drei Luftauslässe (10, 12) umfassen:
- einen zentralen Luftauslass (12) zur Integration in einen Fahrzeugsitz (2) des Fahrzeuges (1), um eine gerichtete Luftausströmung (20) in einen Belüftungsbereich (6) hinter dem Fahrzeugsitz (2) bereitzustellen,
- zwei seitliche Luftauslässe (11a, 11b), welche zur Integration in den Fahrzeugsitz (2) seitlich zum zentralen Luftauslass (12) angeordnet sind, um eine diffuse Luftausströmung (21) in den Belüftungsbereich (6) bereitzustellen,
wobei wenigstens eine Lamelle (14) im Auslassbereich des zentralen Luftauslasses (12) und/oder der seitlichen Luftauslässe (11a, 11b) beweglich gelagert ist, um den Luftstrom aus dem Auslassbereich einzustellen, wobei die zwei seitlichen Luftauslässe (11a, 11b) auf unterschiedlichen Seiten (7a, 7b) gegenüberliegend zum zentralen Luftauslass (12) angeordnet sind, und auf diesen gegenüberliegenden Seiten (7a, 7b) mit der Luftführungsanordnung (30) verbunden sind, wobei der zentrale Luftauslass (10) zwischen diesen Seiten (7a, 7b) mit der Luftführungsanordnung (30) verbunden ist, um die Luftauslässe (11a, 11b, 12) gemäß einer U-Form im Fahrzeugsitz (2) anzuordnen, **dadurch gekennzeichnet, dass** ein Teil der Luftführungsanordnung (30) längsbeweglich in der an dem Fahrzeugsitz (2) befestigten Befestigungsanordnung (40) geführt ist, sodass der Teil der Luftführungsanordnung (30) relativ zu dem Fahrzeugsitz (2) längsverstellbar ausgeführt ist.

2. Belüftungsvorrichtung (60) nach Anspruch 1,
**dadurch gekennzeichnet,**
**dass** die Befestigungsanordnung (40) zur Befestigung der Luftauslässe (10) an einer Rückwand (4) einer Rückenlehne (3) des Fahrzeugsitzes (2), insbesondere eines Vordersitzes (2a) des Fahrzeuges (1), vorgesehen ist, um die Luftauslässe (10, 12) auf wenigstens einen Rücksitz (2b) des Fahrzeuges (1) im Belüftungsbereich (6), vorzugsweise im Fond (6) des Fahrzeuges (1), auszurichten und somit die jeweilige Luftausströmung (20, 21) für wenigstens einen Fahrzeuginsassen (5) auf dem Rücksitz (2b) bereitzustellen.

3. Belüftungsvorrichtung (60) nach einem der vorhergehenden Ansprüche,
**dadurch gekennzeichnet,**
**dass** eine Steuerungsanordnung (50) vorgesehen ist, um einen Strömungsmechanismus (13) des zentralen Luftauslasses (12) anzusteuern, sodass die Luftausströmung (20) des zentralen Luftauslasses (12) zwischen der gerichteten Luftausströmung (20) und einer weiteren diffusen Luftausströmung (20) umschaltbar ist.

4. Belüftungsvorrichtung (60) nach einem der vorhergehenden Ansprüche,
**dadurch gekennzeichnet,**
**dass** die Luftführungsanordnung (30) wenigstens einen flexiblen Luftkanal (34) und/oder wenigstens ein Teleskoprohr (32) und/oder wenigstens ein Schlauchelement (31) zur Integration an oder im Fahrzeugsitz (2) umfasst, um eine Anpassung an eine Verstellung des Fahrzeugsitzes (2) im Fahrzeug (1) durchzuführen.

5. Fahrzeug,
**dadurch gekennzeichnet,**
**dass** es wenigstens zwei Belüftungsvorrichtungen (60) nach einem der Ansprüche 1 bis 4 umfasst.

## Claims

1. Ventilation device (60) for providing an air flow in a vehicle (1), wherein the ventilation device comprises an air-guiding arrangement (30) which is connected to at least three air outlets (10, 12) in order to direct the air flow to the air outlets (10, 12), and wherein the ventilation device comprises a vehicle seat (2) and a fastening arrangement (40) fastened to the vehicle seat (2), wherein the at least three air outlets (10, 12) comprise:
- a central air outlet (12) for integrating in a vehicle seat (2) of the vehicle (1) in order to provide a directed air outflow (20) into a ventilation region (6) behind the vehicle seat (2),
- two lateral air outlets (11a, 11b) which, for integrating in the vehicle seat (2), are arranged laterally with respect to the central air outlet (12) in order to provide a diffuse air outflow (21) into the ventilation region (6), wherein at least one slat (14) is mounted movably in the outlet region of the central air outlet (12) and/or of the lateral air outlets (11a, 11b) in order to adjust the air flow from the outlet region, wherein the two lateral air outlets (11a, 11b) are arranged on different sides (7a, 7b) opposite the central air outlet (12) and are connected on these opposite sides (7a, 7b) to the air-guiding arrangement (30), wherein the central air outlet (10) is connected between these sides (7a, 7b) to the air-guiding arrangement (30) in order to arrange the air outlets (11a, 11b, 12) in the vehicle seat (2) in accordance with a U shape, **characterized in that** a part of the air-guiding arrangement (30) is guided in a longitudinally movable manner in the fastening arrangement (40), which is fastened to the vehicle seat (2), and therefore the part of the air-guiding arrangement (30) is designed to be longitudinally adjustable relative to the vehicle seat (2) .

2. Ventilation device (60) according to Claim 1, **characterized in that** the fastening arrangement (40) is provided for fastening the air outlets (10) to a rear wall (4) of a backrest (3) of the vehicle seat (2), in particular a front seat (2a) of the vehicle (1), in order to align the air outlets (10, 12) on at least one rear seat (2b) of the vehicle (1) in the ventilation region (6), preferably in the rear (6) of the vehicle (1), and thus to provide the respective air outflow (20, 21) for at least one vehicle occupant (5) on the rear seat (2b).

3. Ventilation device (60) according to either of the preceding claims, **characterized in that** a control arrangement (50) is provided in order to activate a flow mechanism (13) of the central air outlet (12) such that the air outflow (20) of the central air outlet (12) can be switched over between the directed air outflow (20) and a further diffuse air outflow (20).

4. Ventilation device (60) according to one of the preceding claims, **characterized in that** the air-guiding arrangement (30) comprises at least one flexible air duct (34) and/or at least one telescopic tube (32) and/or at least one hose element (31) for integrating on or in the vehicle seat (2) in order to carry out an adaptation to an adjustment of the vehicle seat (2) in the vehicle (1).

5. Vehicle, **characterized in that** it comprises at least two ventilation devices (60) according to one of Claims 1 to 4.

## Revendications

1. Dispositif d'aération (60) pour fournir un courant d'air dans un véhicule (1), le dispositif d'aération comprenant un agencement de guidage d'air (30) relié à au moins trois sorties d'air (10, 12) afin de conduire le courant d'air vers les sorties d'air (10, 12), et
le dispositif d'aération comprenant un siège de véhicule (2) et un agencement de fixation (40) fixé au siège de véhicule (2),
les au moins trois sorties d'air (10, 12) comprenant :
- une sortie d'air centrale (12) destinée à être intégrée dans un siège de véhicule (2) du véhicule (1) afin de fournir un flux sortant d'air directionnel (20) dans une zone d'aération (6) derrière le siège de véhicule (2),
- deux sorties d'air latérales (11a, 11b) qui sont agencées latéralement à la sortie d'air centrale (12) pour être intégrées dans le siège de véhicule (2) afin de fournir un flux sortant d'air diffus (21) dans la zone d'aération (6),
au moins une lamelle (14) étant montée de manière mobile dans la zone de sortie de la sortie d'air centrale (12) et/ou des sorties d'air latérales (11a, 11b) afin d'ajuster le courant d'air provenant de la zone de sortie, les deux sorties d'air latérales (11a, 11b) étant agencées sur des côtés différents (7a, 7b) opposés à la sortie d'air centrale (12) et étant reliées sur ces côtés opposés (7a, 7b) à l'agencement de guidage d'air (30),
la sortie d'air centrale (10) étant reliée entre ces côtés (7a, 7b) à l'agencement de guidage d'air (30) afin d'agencer les sorties d'air (11a, 11b, 12) selon une forme en U dans le siège de véhicule (2), **caractérisé en ce qu'**une partie de l'agencement de guidage d'air (30) est guidée de manière mobile longitudinalement dans l'agencement de fixation (40) fixé au siège de véhicule (2), de telle sorte que la partie de l'agencement de guidage d'air (30) est réalisée de manière à pouvoir être déplacée longitudinalement par rapport au siège de véhicule (2).

2. Dispositif d'aération (60) selon la revendication 1,
**caractérisé en ce que**
l'agencement de fixation (40) est prévu pour fixer les sorties d'air (10) sur une paroi arrière (4) d'un dossier (3) du siège de véhicule (2), notamment d'un siège avant (2a) du véhicule (1), afin d'orienter les sorties d'air (10, 12) sur au moins un siège arrière (2b) du véhicule (1) dans la zone d'aération (6), de préférence à l'arrière (6) du véhicule (1), et de fournir ainsi le flux sortant d'air respectif (20, 21) pour au moins un occupant (5) du véhicule sur le siège arrière (2b).

3. Dispositif d'aération (60) selon l'une quelconque des revendications précédentes,
**caractérisé en ce**
**qu'**un agencement de commande (50) est prévu afin de commander un mécanisme d'écoulement (13) de la sortie d'air centrale (12), de telle sorte que le flux sortant d'air (20) de la sortie d'air centrale (12) peut être commuté entre le flux sortant d'air directionnel (20) et un autre flux sortant d'air diffus (20).

4. Dispositif d'aération (60) selon l'une quelconque des revendications précédentes,
**caractérisé en ce que**
l'agencement de guidage d'air (30) comprend au moins un canal d'air flexible (34) et/ou au moins un tube télescopique (32) et/ou au moins un élément de tuyau (31) destiné à être intégré sur ou dans le siège du véhicule (2) afin d'effectuer une adaptation à un réglage du siège de véhicule (2) dans le véhicule (1).

5. Véhicule,
**caractérisé en ce**
**qu'**il comprend au moins deux dispositifs d'aération (60) selon l'une quelconque des revendications 1 à 4.
